# FASCICULE DE BREVET EUROPEEN

(11) **EP 0 547 929 B1**
(45) Date de publication et mention de la délivrance du brevet: **16.08.1995**
(21) Numéro de dépôt: 92403178.4
(22) Date de dépôt: 25.11.1992
(51) Int. Cl.: B60N 3/14

(54) **Prise de courant, notamment pour véhicule automobile**
Elektrische Anschlussbuchse, insbesondere für Kraftfahrzeuge
Electrical socket, in particular for automotive vehicles

(30) Priorité: 03.12.1991 FR 9114959
(43) Date de publication de la demande: 23.06.1993
(73) Titulaire: VALEO VISION, 93012 Bobigny Cédex (FR)
(72) Inventeur: Thivet, Gilles, F-81290 Labruguière (FR)
(74) Mandataire: Gamonal, Didier

(56) Documents cités:
- EP-A- 0 448 501
- DE-B- 2 254 712
- FR-A- 2 235 022
- FR-A- 2 320 211
- US-A- 4 527 048
- US-A- 4 899 263

## Description

La présente invention concerne une prise de courant, notamment pour véhicule automobile, selon le préambule de la revendication 1 et tel que décrit dans le document FR-A-2 169 587.

Dans ce brevet la lampe d'éclairage est montée par la face arrière de la douille d'un seul tenant avec le capot, en sorte que lors du démontage du sous-ensemble on risque de saisir d'abord la lampe et de l'endommager. En pratique, il faut saisir par l'avant le capot pour effectuer le démontage ce qui est mal aisé.

Une telle prise est décrite également dans le document FR-A-2 436 939. Dans ce brevet la bague éclairante porte d'un seul tenant la douille avec son capot intégré. Cette disposition ne donne pas entièrement satisfaction car le capot n'est pas séparé de la douille et est en matériau conducteur de lumière tout comme la douille issue de la bague éclairante. Il en résulte des fuites de lumière.

En outre le démontage de la lampe n'est pas aisé et requiert de la place au niveau de la face dorsale de la paroi de fixation de la prise.

Pour éviter les fuites de lumière on peut songer à séparer le capot de la douille et à rendre ledit capot opaque comme dans une forme de réalisation de ce brevet.

Cette disposition requiert également de la place au niveau de la face dorsale de la paroi de fixation de la prise pour démonter le capot. En outre, le sous-ensemble douille - capot n'est plus en une seule pièce.

La présente invention a pour objet de pallier ces inconvénients, et donc de créer, de manière simple et économique, un sous-ensemble unitaire douille porte-lampe - capot permettant un bon éclairage de la bague éclairante tout en rendant possible un démontage aisé de la lampe et en diminuant l'encombrement de démontage au niveau de la face dorsale de la paroi de fixation de la prise.

Suivant l'invention, une prise de courant selon le document FR-A-2 169 587 est caractérisée par la partie caractérisante de la revendication 1.

Grâce à l'invention les fuites de lumière sont minimisées et il est possible de monter et de démonter par l'arrière aisément ledit sous-ensemble sans extraction de la lampe, en sorte que le volume nécessaire pour le démontage de la lampe est réduit au minimum.

En effet, il suffit de démonter axialement le sous-ensemble par l'arrière pour pouvoir ultérieurement démonter la lampe par la face avant de la douille conformée à cet effet.

En outre, le sous-ensemble et la bague éclairante sont, aisément réalisables par moulage et la lampe est protégée.

Avantageusement le montage du sous-ensemble sur sa douille éclairante se fait à la manière d'un tiroir, ledit sous-ensemble unitaire et ladite bague éclairante présentant des moyens d'emboîtement complémentaires, pour montage par emboîtement axial dudit sous-ensemble sur la bague éclairante.

Avantageusement l'articulation est protégée par une encoche, telle qu'une rainure pratiquée à l'arrière de la bague éclairante.

Dans une forme de réalisation le sous-ensemble est monobloc, l'articulation consistant en une charnière souple. Cette réalisation est économique et diminue le nombre de pièces.

D'autres avantages apparaîtront à la lumière de la description qui va suivre en regard des dessins annexés dans lesquels :
- la figure 1 est une vue en coupe axiale du sous-ensemble selon l'invention ;
- la figure 2 est une vue en coupe selon la ligne A-A de la figure 2 ;
- la figure 3 est une vue en perspective montrant le montage du sous-ensemble sur sa bague éclairante associée ;
- la figure 4 est une vue en perspective montrant le sous-ensemble démonté avec le capot relevé ;
- la figure 5 est une vue en perspective éclatée de la prise de courant.

Dans les figures, est illustrée une prise de courant, pour véhicule automobile, du genre comportant une bague éclairante 7 portant une douille porte-lampe 1 avec un capot 2 intégré à la douille à l'aide d'une articulation 6, le capot 2 recouvrant ladite douille 1 et la lampe d'éclairage 3.

Suivant l'invention une prise de courant pour véhicule automobile, du genre comportant une bague éclairante 7 portant un sous-ensemble unitaire d'éclairage 1,2 en matériau plus opaque que ladite bague et constituant un boîtier pour une lampe d'éclairage 3, dans laquelle ledit sous-ensemble, d'une part, est distinct de la bague éclairante 7 en étant rapporté sur celle-ci par des moyens d'assemblage démontables 15,76 et, d'autre part, comporte une lampe 3 portée par une douille porte-lampe 1, dite par commodité douille, est caractérisée en ce que la lampe d'éclairage 3 est montée par la face avant de la douille 1, en ce que ledit sous-ensemble 1,2,3 comporte, en outre, un capot 2 de forme creuse coiffant la douille 1 et la partie éclairante de la lampe 3 montée en saillie axiale par rapport à la face avant de ladite douille 1, et en ce que, axialement, le capot 2 présente une extrémité arrière 24 se raccordant par une articulation 6 à une portion arrière 13 de la douille 1 formant un prolongement vers l'arrière de ladite douille 1, ladite extrémité arrière du capot 2 recouvrant ladite portion arrière 13 de la douille 1, en sorte de créer ledit sous-ensemble.

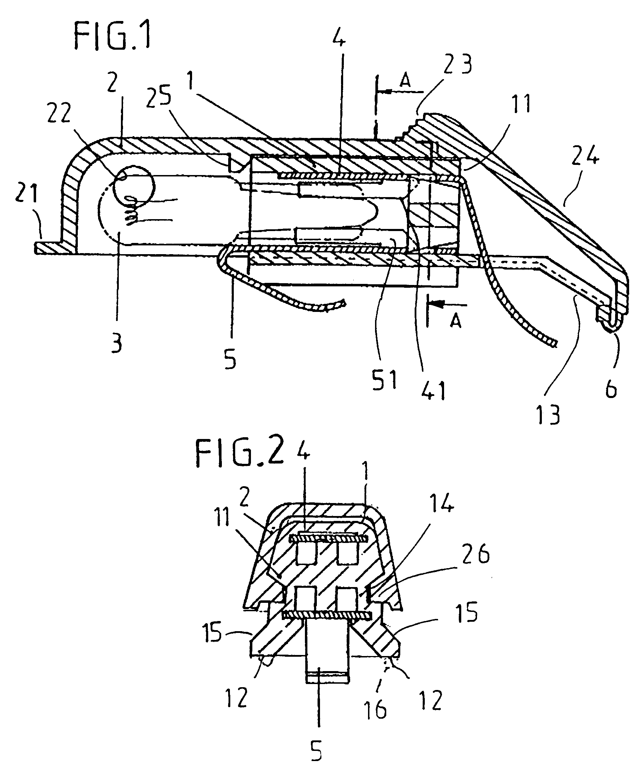

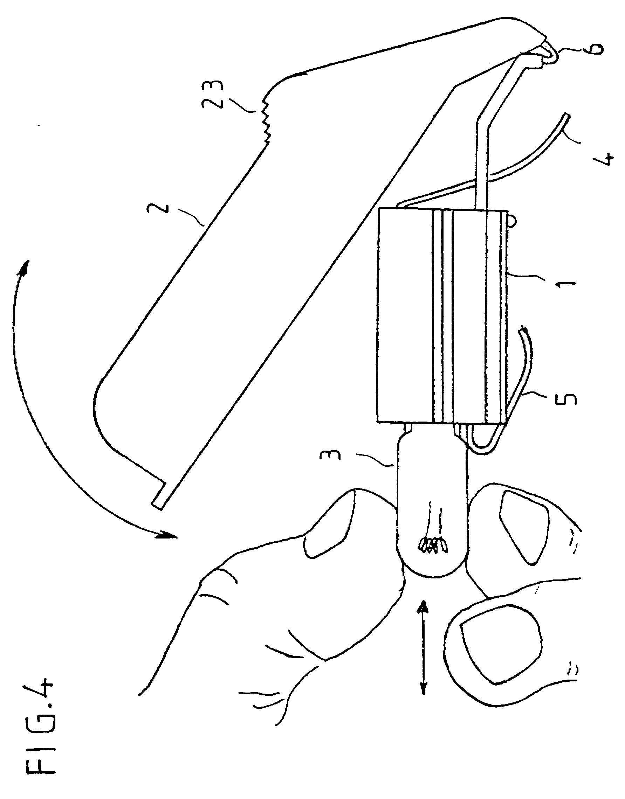

Dans les figures 1 à 4, ledit sous-ensemble 1,2 et bague éclairante 7 présentent des moyens d'emboîtement 15,76 pour montage par emboîtement axial dudit sous-ensemble sur de la bague 7.

Ainsi selon l'invention la douille 1 et le capot 2 forment un sous-ensemble unitaire constituant un boîtier pour la lampe d'éclairage 3. Ils sont avantageusement en matériau opaque, ici en matière plastique, pour éviter les fuites de lumière afin de bien éclairer la bague 7. Le capot 2 est monté à son extrémité arrière 24 à articulation sur une portion arrière 13 de la douille 1 au moyen d'une charnière souple 6 raccordant l'extrémité arrière 24 à la portion arrière 13 en sorte que le sous-ensemble 1,2 est monobloc.

La douille 1 porte la lampe d'éclairage 3 et est de forme creuse à cet effet en présentant un fond arrière 11 ajouré. Cette douille 1 est conformée intérieurement pour recevoir le culot de la lampe 3, montée par la face avant de la douille, ainsi que des languettes d'alimentation électrique 4,5 de la lampe, ici des languettes métalliques.

La douille 1 et le capot 2, qui sont en même matériau, sont électriquement isolants tout comme la bague éclairante 7, décrite ci-après.

La douille 1 présente donc une cavité, pour réception du culot de la lampe, et est rainurée intérieurement pour permettre un montage par enfilage axial des languettes 4,5.

La languette 4 est implantée au voisinage de la face supérieure de la douille 1 (figure 1), tandis que la languette 5 est implantée au voisinage de la face inférieure de la douille 1. La languette 4 est enfilée par l'arrière dans sa rainure associée et traverse le fond 11 ouvert à cet effet.

La languette 5 est enfilée, comme la lampe 3, par la face avant de la douille 1 dans sa rainure associée et est en forme d'épingle contournant la face inférieure de la douille 1. A l'extérieur de la douille 1 (en direction de la bague 7), elle présente une partie inclinée et bombée pour contact élastique ponctuel avec le corps d'allumage 8 métallique que comporte la prise de courant.

Cette languette 5 est donc connectée à la borne négative de la batterie par l'intermédiaire du corps 8 électriquement conducteur.

La languette 4 présente à l'extérieur de la douille 1 une extrémité inclinée dirigée vers la paroi inférieure de la douille 1 pour sa connexion à la borne positive de la batterie et formation d'un connecteur à trois voies avec les deux alimentations électriques du corps 8.

A l'intérieur de la douille 1, chaque languette présente un bras élastique respectivement 41,51. Le culot de la lampe 3, avec ses fils d'alimentation électrique, est pincé, de manière connue en soi, entre les bras 41, 51 pour contact avec ceux-ci et alimentation électrique de la lampe 3, dont la partie éclairante est montée en saillie axiale par rapport à la face avant de la douille 1.

Pour maintien des languettes 4,5, chacune de celles-ci présente une ouverture, tandis que la douille 1 présente des picots pénétrant dans lesdites ouvertures (figure 1).

Le fond 11 est ajouré pour que le bras 41 puisse pénétrer à l'intérieur de la douille 1.

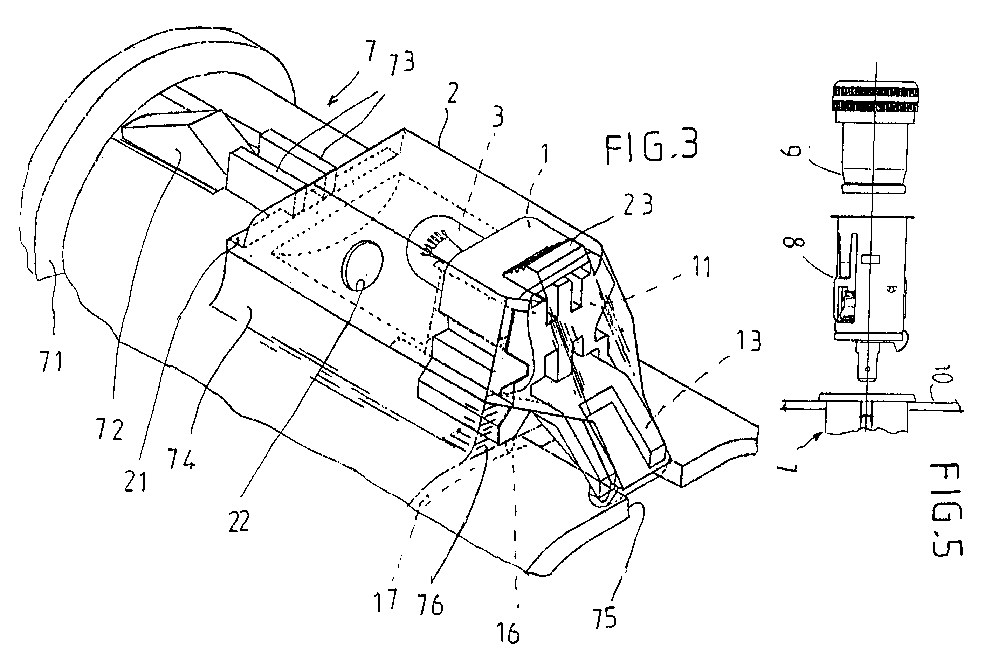

On appréciera (figures 1 et 3) que les extrémités saillantes et échelonnées axialement des languettes 4,5 ont, à l'extérieur de la face interne de la douille 1, une forme inclinée dans le même sens (en direction opposée à la lampe 3).

Tout ceci facilite les connexions électriques lors du montage par enfilage du sous-ensemble 1 - 2.

Cette douille 1 présente sur chacune de ses faces latérales (figure 2) une rainure 14. A sa base, adjacente à la bague 7, la douille 1 présente latéralement de part et d'autre de son plan de symétrie un jambage incliné 12 définissant extérieurement un profil 15 avec une portion inclinée se raccordant à chacune de ses extrémités à une portion verticale.

Le capot 2 est de forme creuse et présente axialement une extrémité avant avec un rebord 21 et une extrémité arrière inclinée 24 se raccordant par la charnière souple 6 en forme de film à la douille 1. C'est ce film 6 qui constitue la charnière d'articulation permettant de créer un sous-ensemble monobloc douille 1 - capot 2.

Latéralement le capot 2 est doté d'une ouverture 22 afin d'éclairer le cendrier du véhicule. Le capot 2 coiffe la douille 1 et la partie éclairante et saillante de la lampe 3 (figure 1). Sa taille est déterminée en conséquence.

La face supérieure de ce capot 2 est dotée à l'arrière d'une protubérance crantée 23 de préhension se raccordant à l'extrémité arrière 24 du capot.

En variante, les bords latéraux du capot peuvent être dotés de protubérances au voisinage de l'extrémité 24.

On notera que la douille 1 est prolongée vers l'arrière par une portion 13 à extrémité en forme de U, le film 6 raccordant l'extrémité arrière inclinée 24 du capot 2 à chaque branche du U de la portion 13. Ainsi le pivotement du capot 2 est aisé compte tenu que le film est en deux parties de faible dimension. L'extrémité arrière 24 recouvre ladite portion 13 ainsi que l'extrémité de la languette d'alimentation électrique 4, dont elle assure la protection, ladite extrémité de la languette 4 traverse le U de la portion 13 et s'étend donc en direction de l'intérieur de la bague 7.

Cette bague 7 comporte une collerette extérieure 71 propre à venir en appui sur le bord de l'orifice d'une paroi de support et de fixation 10 visible notamment dans le susmentionné document FR-A-2 436 939. Cette bague 7 est réalisée ici en matière plastique translucide voire transparente. Elle comporte deux languettes élastiques nervurées 72 pour fixation de la prise.

Les nervures 72 sont en forme de triangle pour faciliter l'introduction de la bague 7 dans l'orifice de la paroi de fixation. La bague 7 reçoit ici le corps d'allumage métallique 8 d'un allume-cigares constituant la prise selon l'invention (figure 5).

De manière connue en soi, ce corps 8 est obtenu par emboutissage. Il porte des parties d'alimentation électrique, le plus souvent des languettes métalliques, ainsi qu'un élément élastique d'accrochage, le plus souvent un bilame. Il reçoit un bouchon amovible chauffant 9 pourvu d'un corps de chauffage propre à s'accrocher sur le bilame durant l'opération de chauffage.

La bague éclairante 7 facilite la mise en place du bouchon 9 dans l'obscurité, les languettes 4,5 étant insérées dans le circuit d'éclairage du véhicule automobile. Elle a pour but également de permettre une fixation simple et rapide de la prise à l'intérieur de l'orifice de la paroi de fixation 10 du véhicule et d'assurer de manière automatique le verrouillage du corps d'allumage.

Pour plus de précision, on se reportera par exemple au document FR-A-2 630 057. Ainsi qu'on le sait lorsque l'on introduit le corps dans la bague 7 on vient soulever les languettes 72 et immobiliser la bague 7 de part et d'autre de la paroi 10 qui, après montage, est insérée entre la collerette 71 et les languettes 72.

La bague 7 porte en saillie deux nervures axiales 73 épaulées, implantées au voisinage des languettes 72, elles-mêmes voisines de la collerette 71. Les nervures 73 surplantent la bague 7 en ayant une section en forme d'équerre.

Au-delà des nervures 73, la bague 7 porte extérieurement en saillie latéralement deux ailes 74 formant un socle d'appui pour le capot 2. Ces ailes 74 sont disposées en regard l'une de l'autre et présentent intérieurement un contre-profil 76 adapté au profil 15 des jambages 12. Elles sont adaptées à recevoir intérieurement la douille 1.

Bien entendu, l'écartement des ailes 74 et la forme des contre-profils 76 sont adaptés à la taille de la douille 1 et des profils 15. La face arrière de la bague 7 est dotée d'une rainure 75 pour passage de la portion arrière 13 de la douille 1, des films 6 ainsi que de l'extrémité de la face 24 et de la languette 4. La portion 13 (figure 1 et 3) s'étend au-dessus de la base de la douille 1 et les branches de son U pénètrent dans la rainure 75 en étant inclinées vers l'axe pour ce faire.

On notera que la languette 5 est adaptée à venir se loger, par son extrémité, entre les deux jambages 12 et que le film 6 est protégé, grâce à la rainure 75 évitant de le saisir. Bien entendu, la douille 1 présente une fente de largeur réduite entre ces ailes 74 pour pénétration de la languette 5, ladite fente fermée débouchant centralement dans la rainure 75.

Ainsi qu'on l'aura compris, et qu'il ressort à l'évidence de la description, le sous-ensemble monobloc capot 2 - douille 1 et la bague éclairante présentent des moyens d'emboîtement complémentaires 15,76 pour montage par emboîtement axial dudit sous-ensemble 1,2 sur la bague éclairante 7 à la manière d'un tiroir. En effet, au montage il suffit d'engager axialement le capot 2 sur les ailes 74 et de rapprocher le sous-ensemble 1,2 des nervures 73. Lors de ce mouvement de rapprochement axial, la douille 1, latéralement par ses deux jambages profilés 12, est propre à s'emboîter dans les ailes 74 (entre celles-ci), les profils 15 coopérant alors de manière complémentaire avec les contre-profils 76.

Le mouvement est poursuivi jusqu'à ce que le rebord 21 du capot 2 vienne se loger sous les nervures 73 destinées à venir prendre appui sur la face supérieure de celui-ci et à venir buter contre la tranche terminale de celui-ci.

Lors de ce rapprochement la partie arrière du sous-ensemble 1,2 est admise à pénétrer dans la rainure 75 de protection de la bague 7 et les bord latéraux du capot 2 recouvrent les ailes 74 en évitant ainsi les fuites de lumière.

On notera que le contre-profil 76 comporte une portion verticale se raccordant à l'une de ses extrémités à une portion inclinée et à l'autre de ses extrémités à la partie principale de la douille 1. Ainsi il est formé des rainures pour le montage des jambages 12.

Bien entendu, on peut inverser les structures, la douille 1 présentant des rainures et les ailes 74 des saillies.

Après montage, la douille 1 est immobilisée transversalement dans les deux sens, d'une part, par coopération des parois inclinées des profils 15 et des contre-profils 76, et, d'autre part par coopération de la base des jambages 12 avec la partie principale de la douille 1.

Axialement dans un sens axial le sous-ensemble est immobilisé par les nervures 73, disposées entre les ailes 74 en bout de celles-ci, et dans l'autre sens axial par serrage. Bien entendu, on peut également prévoir un verrouillage positif, l'extrémité arrière des jambages 12 présentant alors une saillie 16 propre à venir s'encliqueter dans une rainure correspondante 17 pratiquée dans la bague 7. Bien entendu on peut inverser les structures la bague 7 présentant la saillie et les jambages 12 les rainures.

Les profils 15 et les contre-profils 76 portent ainsi de manière complémentaire au moins une saillie et une rainure pour leur verrouillage axial mutuel.

Latéralement la douille 1 présente, au-dessus des profils 15, les rainures 14 distinctes des moyens d'emboîtement et dans lesquelles sont propres à venir s'encliqueter des saillies 26 de forme complémentaire portées par les parois latérales du capot 2. Le capot 2 présente un cran incliné 25 pour coopération avec la face avant, tournée vers la collerette 71, de la douille 1.

Le cran protège les films 6 lors de l'extraction du sous-ensemble 1,2.

Le capot 2 et la douille 1 ont globalement en section la forme d'un V (figure 2).

Ainsi en cas de défaillance de la lampe 3, on peut aisément extraire le sous-ensemble 1,2 en effectuant un mouvement axial en sens inverse de celui décrit précédemment, la douille 1 au cours de cette opération s'éloignant des nervures 73 pour s'échapper des contre-profils 76.

Après extraction du sous-ensemble, on peut manipuler aisément celui-ci et venir soulever, à l'extérieur de la paroi de fixation du véhicule, le capot 2 pour le déboîter de la douille 1.

Cette extraction se fait donc par désencliquetage des saillies 26 des rainures 14 et par pivotement du capot grâce aux films 6.

On appréciera que la protubérance 23, ainsi que la paroi inclinée 24, facilitent les opérations de montage et de démontage du sous-ensemble par rapport à la bague 7 et que le rebord 21 facilite le désassemblage du capot 2 par rapport à la douille 1.

L'extrémité arrière inclinée 24 permet également de réduire l'encombrement transversal du sous-ensemble et sert de guide pour accès aisé à la protubérance 23.

Après avoir soulevé le capot 2 (figure 2) on peut aisément accéder à la lampe 3 par la face avant de la douille 1, puis refermer le sous-ensemble par encliquetage du capot 2 avec la douille 1, sans risque d'endommager les films 6 grâce au cran 25, qui ménage également les films 6 lors de l'opération de démontage.

On appréciera que l'opération de soulèvement du capot 2 se fait après démontage du sous-ensemble 1,2, en sorte que l'encombrement au niveau de la face dorsale de la paroi de fixation de la prise est réduit et qu'il est donc possible de loger à proximité de la prise d'autres accessoires.

On appréciera que la création du sous-ensemble permet d'implanter la charnière d'articulation à l'arrière, en sorte que l'on peut aisément saisir le sous-ensemble par l'arrière et démonter par l'avant aisément la lampe 3, la protubérance 23 étant éloignée de la collerette 71 et de la paroi de fixation du véhicule. Les connexions électriques sont également réalisées simplement lors de l'emboîtement du sous-ensemble.

Bien entendu on peut monter à l'intérieur de la bague un corps conducteur dépourvu de bilame pour réaliser uniquement l'alimentation électrique d'un accessoire tel qu'une lampe d'éclairage, un chauffe-biberons ou autre.

En variante, les moyens d'assemblage démontables peuvent comporter des vis ou consister en des moyens d'encliquetage à pattes et à crans .

Par exemple, on peut remplacer les ailes 74 par des pattes élastiques surplombant la partie principale de la bague 7, en étant ancrée dans celle-ci au niveau des nervures 73. Ces pattes viennent alors en prise chacune avec une ouverture pratiquée dans une partie saillie de la douille 1.

De même, au lieu d'une charnière souple avec un film en deux parties on peut prévoir des axes d'articulation (un axe par branche de la portion 13). Ces axes peuvent être distinctes de l'extrémité arrière 24 et de la portion 13 en variante, par exemple, l'extrémité 24 peut porter latéralement deux axes reçus chacun dans un berceau porté par la branche concernée de la portion 13, l'assemblage se faisant par clipsage.

En variante on peut inverser les structures, la douille 1 portant un cran venant buter contre un épaulement formé à la faveur d'une rainure ménagée dans la face supérieure du capot 2 pour solidarisation axiale (en traction) dans le sens allant de la face avant du sous-ensemble 1,2 à sa face arrière et protéger l'articulation 6.

En variante, la face supérieure du capot peut porter intérieurement deux têtes sphériques s'engageant dans des logements sphériques complémentaires pratiqués dans la face supérieure de la douille 1.

Dans ce cas la présence des rainures et des saillies 26 est inutile, les têtes et les logements sphériques permetant un montage par encliquetage de la douille 1 avec le capot, tout en protégeant les articulations 6 lors de l'extraction du sous-ensemble 1,2 et en constituant des moyens de solidarisation axiale dans les deux sens entre le capot 2 et la douille 1.

En variante, la languette 4 peut traverser à jeu axialement la face arrière 24.

Dans le cas la portion 13 peut être plus courte et la face arrière 24 du capot 2 plus droite.

## Revendications

1. Prise de courant pour véhicule automobile, du genre comportant une bague éclairante (7) portant un sous-ensemble unitaire d'éclairage (1,2) en matériau plus opaque que ladite bague et constituant un boîtier pour une lampe d'éclairage (3), dans laquelle ledit sous-ensemble, d'une part, est distinct de la bague éclairante (7) en étant rapporté sur celle-ci par des moyens d'assemblage (15,76) démontables et, d'autre part, comporte une lampe d'éclairage (3) portée par une douille porte-lampe (1), dite par commodité douille, caractérisée en ce que la lampe d'éclairage (3) est montée par la face avant de la douille (1), en ce que ledit sous-ensemble (1,2,3) comporte en outre un capot (2) de forme creuse coiffant la douille (1) et une partie éclairante de la lampe (3) montée en saillie axiale par rapport à la face avant de ladite douille (1), et en ce que, axialement, le capot (2) présente une extrémité arrière (24) se raccordant par une articulation (6) à une portion arrière (13) de la douille (1) formant un prolongement vers l'arrière de ladite douille (1), ladite extrémité arrière (24) du capot (2) recouvrant ladite portion arrière (13) de la douille (1), en sorte de créer ledit sous-ensemble.

2. Prise de courant selon la revendication 1, caractérisée en ce que la face supérieure du capot (2) est dotée à l'arrière d'une protubérance crantée (23) de préhension se raccordant à l'extrémité arrière (24) du capot (2).

3. Prise de courant selon la revendication 1 ou 2, caractérisée en ce que l'extrémité arrière (24) du capot (2) est inclinée et se raccorde à ladite portion arrière (13) de la douille (1) par une charnière souple (6) en forme de film, formant ladite articulation en sorte que ledit sous-ensemble est monobloc.

4. Prise de courant selon l'une quelconque des revendications 1 à 3, caractérisée en ce que la douille (1) est prolongée vers l'arrière par une portion (13) à extrémité en forme de U, chaque branche du U portant un film (6) de raccordement de l'extrémité arrière (24) du capot (2) à la douille (1), en sorte que ledit film (6) est en deux parties.

5. Prise de courant selon la revendication 4, dans laquelle la douille (1) présente une cavité pour réception de la lampe d'éclairage et est rainurée intérieurement pour permettre un montage par enfilage axial de languettes d'alimentation électriques (4,5) de la lampe (3), l'une (4) des languettes, dite languette supérieure, étant implantée au voisinage de la face supérieure de la douille (1), tandis que l'autre (5) languette, dite languette inférieure, est implantée au voisinage de la face inférieure de la douille (1), caractérisée en ce que l'extrémité arrière (24) du capot (2) recouvre la portion (13) à extrémité en forme de U de la douille (1), ainsi que l'extrémité de la languette supérieure (4), dont elle assure la protection, ladite languette supérieure (4) s'étendant en partie à l'extérieur de la douille (1).

6. Prise de courant selon la revendication 5, caractérisée en ce que la languette supérieure (4) présente à l'extérieur de la douille (1) une extrémité inclinée dirigée vers la paroi inférieure de la douille (1), ladite extrémité traversant le U de la portion (13) de la douille (1) et s'étendant donc en direction de l'intérieur de la bague éclairante (7).

7. Prise de courant selon la revendication 6, caractérisée en ce que les languettes d'alimentation (4,5) présentent, à l'extérieur de la douille (1), des extrémités saillantes, échelonnées axialement et inclinées dans le même sens, en direction opposée à la lampe (3).

8. Prise de courant selon l'une quelconque des revendications 4 à 7, caractérisée en ce que la face arrière de la bague éclairante (7) est dotée d'une rainure (75) pour passage de la portion (13) de la douille (1), des films (6), ainsi que pour passage de l'extrémité arrière (24) du capot et de la languette supérieure (4).

9. Prise de courant selon la revendication 8, caractérisée en ce que, pour formation de moyens d'assemblage démontables entre ledit sous-ensemble monobloc (1,2) et la bague éclairante (7) sous forme de moyens d'emboîtement complémentaires à montage axial, la douille (1) présente latéralement à sa base des jambages inclinés (12) définissant chacun un profil (15) avec une portion inclinée se raccordant à chacune de ses extrémités à une portion verticale.

10. Prise de courant selon la revendication 9, caractérisée en ce que, pour formation desdits moyens d'emboîtement complémentaires, la bague éclairante (7) présente deux ailes (74) disposées en regard l'une de l'autre et présentant intérieurement chacune un contre-profil (76) adapté au profil (15) des jambages (12).

11. Prise de courant selon la revendication 10, caractérisée en ce que les ailes (74) constituent un socle d'appui pour le capot (2).

12. Prise de courant selon la revendication 10 ou 11, caractérisée en ce que les profils (15) du sous-ensemble (1,2) et les contre-profils (76) de la bague éclairante (7) portent, de manière complémentaire, au moins une saillie et une rainure pour leur verrouillage axial mutuel.

13. Prise de courant selon l'une quelconque des revendications 9 à 12 et la revendication 7, caractérisée en ce que la languette inférieure (4) est destinée à se loger, par son extrémité, entre les deux jambages inclinés (12).

14. Prise de courant selon l'une quelconque des revendications 1 à 13, caractérisée en ce que la bague éclairante (7) présente deux nervures axiales épaulées (73) pour coopération avec un rebord (21), que présente l'extrémité avant du capot (2), et immobilisation axiale dans un sens du sous-ensemble (1,2), lesdites nervures (73) étant destinées à venir en appui sur ledit rebord (21).

15. Prise de courant selon l'une quelconque des revendications 1 à 14, caractérisé en ce que des moyens de solidarisation axiale au moins dans le sens allant de la face avant du sous-ensemble à la face arrière du sous-ensemble (1,2), interviennent entre le capot (2) et la douille (1).

16. Prise de courant selon la revendication 15, caractérisée en ce que le capot (2) présente un cran incliné (25) pour coopération avec la face avant de la douille (1).

17. Prise de courant selon l'une quelconque des revendications 1 à 16, caractérisée en ce que la douille (1) présente, sur chacune de ses faces latérales, une rainure (14) pour coopération avec des saillies (26) de forme complémentaire portées par les parois latérales du capot (2) et montage par encliquetage des saillies (26) dans les rainures (14), lesdites saillies et rainures étant distinctes des moyens d'assemblage (15,76) démontables.

## Claims

1. An electrical socket for a motor vehicle, of the kind comprising an illuminating ring (7) carrying a unitary lighting sub-assembly (1, 2) of a material more opaque than the said ring and constituting a housing for an illuminating lamp (3), in which the said sub-assembly, firstly, is separate from the illuminating ring (7), being carried on the latter by a dismountable assembly means (15, 76), and, secondly, includes an illuminating lamp (3) carried by a lamp holder sleeve (1), referred to as the sleeve for convenience, characterised in that the illuminating lamp (3) is fitted through the front face of the sleeve (1), in that the said sub-assembly (1, 2, 3) further includes a hollow cap (2), capping the sleeve (1) and an illuminating portion of the lamp (3), which is fitted so as to project axially with respect to the front face of the said sleeve (1), and in that the cap (2) has an axially extending rear end portion (24) which is joined by means of an articulation (6) to a rear portion (13) of the sleeve (1), which constitutes a rearward extension of the said sleeve (1), with the said rear end portion (24) of the cap (2) covering the said rear portion (13) of the sleeve (1), whereby to constitute the said sub-assembly.

2. An electrical socket according to Claim 1, characterised in that the upper face of the cap (2) is provided at its rear with a ribbed gripping projection (23) which is joined to the rear end portion (24) of the cap (2).

3. An electrical socket according to Claim 1 or Claim 2, characterised in that the rear end portion (24) of the cap (2) is inclined, and is joined to the said rear portion (13) of the sleeve (1) by means of a flexible film hinge (6) constituting the said articulation, whereby the said sub-assembly is monobloc.

4. An electrical socket according to any one of Claims 1 to 3, characterised in that the sleeve (1) is extended rearwardly by a U-shaped end portion (13), with each branch of the U carrying a film (6) joining the rear end portion (24) of the cap (2) to the sleeve (1), so that the said film (6) is in two parts.

5. An electrical socket according to Claim 4, in which the sleeve (1) has a cavity for receiving the illuminating lamp, and is grooved internally in order to enable tongues (4, 5), for the electrical supply of the lamp (3), to be fitted by axial insertion, with one (4) of the tongues, referred to as the upper tongue, being fitted close to the upper face of the sleeve (1), while the other tongue (5), referred to as the lower tongue, is fitted close to the lower face of the sleeve (1), characterised in that the rear end portion (24) of the cap (2) covers the U-shaped end portion (13) of the sleeve (1) and also the end of the upper tongue (4), so that it protects the latter, the said upper tongue (4) extending partly outside the sleeve (1).

6. An electrical socket according to Claim 5, characterised in that the upper tongue (4) has on the outside of the sleeve (1) an inclined end portion directed towards the lower wall of the sleeve (1), the said end portion extending through the U of the portion (13) of the sleeve (1) and accordingly extending towards the interior of the illuminating ring (7).

7. An electrical socket according to Claim 6, characterised in that the supply tongues (4, 5) have, on the outside of the sleeve (1), projecting end portions which are slanted axially and inclined away from the lamp (3) in the same direction.

8. An electrical socket according to any one of Claims 4 to 7, characterised in that the rear face of the illuminating ring (7) has a groove (75) to permit passage of the portion (13) of the sleeve (1) and films (6), and also to permit passage of the rear end portion (24) of the cap and the upper tongue (4).

9. An electrical socket according to Claim 8, characterised in that the sleeve (1) has at its base lateral inclined knee elements (12), each of which defines a profile (15) with an inclined portion joined at each of its ends to a vertical portion, whereby to constitute dismountable means for assembly between the said monobloc sub-assembly (1, 2) and the illuminating ring (7) in the form of axially-fitting, complementary mating means.

10. An electrical socket according to Claim 9, characterised in that the illuminating ring (7) has two wing portions (74), disposed in facing relationship to each other and each having an internal counter profile (76) matching the profile (15) of the knee elements (12), whereby to define the said complementary mating means.

11. An electrical socket according to Claim 10, characterised in that the wing portions (74) constitute a support for engagement by the cap (2).

12. An electrical socket according to Claim 10 or Claim 11, characterised in that the profiles (15) of the sub-assembly (1, 2) and the counter profiles (76) of the illuminating ring (7) carry, in a complementary manner, at least one projection and a groove for locking them axially together.

13. An electrical socket according to any one of Claims 9 to 12 and Claim 7, characterised in that the lower tongue (4) is adapted to be fitted by means of its end between the two inclined knee elements (12).

14. An electrical socket according to any one of Claims 1 to 13, characterised in that the illuminating ring (7) has two shouldered axial ribs (73) for cooperation with a flange portion (21) of the front end of the cap (2) and for immobilising the sub-assembly (1, 2) axially in one direction, the said ribs (73) being adapted to engage on the said flange portion (21).

15. An electrical socket according to any one of Claims 1 to 14, characterised in that means for axial fastening, at least in the direction going from the front face of the sub-assembly to the rear face of the sub-assembly (1, 2), are arranged between the cap (2) and the sleeve (1).

16. An electrical socket according to Claim 15, characterised in that the cap (2) has an inclined lug (25) for cooperating with the front face of the sleeve (1).

17. An electrical socket according to any one of Claims 1 to 16, characterised in that the sleeve (1) has, on each of its lateral faces, a groove (14) for cooperation with projections (26) of complementary form, which are carried by the lateral walls of the cap (2) and for snap-fitting of the projections (26) in the grooves (14), the said projections and grooves being separate from the dismountable assembly means (15, 76).

## Patentansprüche

1. Elektrische Anschlußbuchse für Kraftfahrzeuge der Bauart, die einen Leuchtring (7) umfaßt, der eine Beleuchtungsuntereinheit (1, 2) aus einem Material trägt, das weniger transparent ist als der Ring und ein Gehäuse für eine Lampe (3) darstellt, und in der einerseits die Untereinheit von dem Leuchtring (7) getrennt ist, indem sie auf diesem mittels demontierbarer Verbindungsmittel (15, 76) angebracht ist, und die andererseits eine Lampe (3) umfaßt, die von einer Lampenfassung (1) getragen wird - der Einfachheit halber Fassung genannt -, **dadurch gekennzeichnet**, daß die Lampe (3) über die Vorderseite der Fassung (1) montiert wird, daß die Untereinheit (1, 2, 3) außerdem eine Haube (2) von hohler Form umfaßt, die die Fassung (1) bedeckt und einen Beleuchtungsabschnitt der Lampe (3), der axial vorspringend in bezug zu der Vorderseite der Fassung (1) montiert ist, und daß die Haube (2) axial ein hinten liegendes Ende (24) aufweist, das über ein Gelenk (6) mit einem hinteren Teil (13) der Fassung (1) verbunden ist, wobei eine Verlängerung der Fassung (1) nach hinten geformt wird und das hinten liegende Ende (24) der Haube (2) den hinteren Teil (13) der Fassung (1) so bedeckt, daß die Untereinheit gebildet wird.

2. Elektrische Anschlußbuchse nach Anspruch 1, **dadurch gekennzeichnet**, daß das Oberteil der Haube (2) hinten mit einem gerippten Griffbereichsabschnitt (23) versehen ist, der sich an das hintere Ende (24) der Haube (2) anschließt.

3. Elektrische Anschlußbuchse nach Anspruch 1 oder 2, **dadurch gekennzeichnet**, daß das hintere Ende (24) der Haube (2) geneigt ist und sich an den hinteren Teil (13) der Fassung (1) über ein elastisches Scharnier (6), das die Form einer Folie hat, anschließt, wobei das Gelenk so gebildet wird, daß die Untereinheit eine Monoblock-Konstruktion ist.

4. Elektrische Anschlußbuchse nach einem der Ansprüche 1 bis 3, **dadurch gekennzeichnet**, daß die Fassung (1) nach hinten durch einen Teil (13) mit einem u-förmigen Ende verlängert wird, wobei jeder Zweig des U eine Verbindungsfolie (6) vom hinten liegenden Ende (24) der Haube (2) bis zur Fassung (1) trägt, so daß die Folie (6) aus zwei Teilen besteht.

5. Elektrische Anschlußbuchse nach Anspruch 4, bei der die Fassung (1) einen Hohlraum zur Aufnahme der Lampe aufweist und innen mit Rillen versehen ist, um eine Montage über axiales Einbringen von elektrischen Kontaktzungen (4, 5) der Lampe (3) zu ermöglichen, wobei eine (4) der Zungen, mit oberer Zunge bezeichnet, in der Nähe der Oberseite der Fassung (1) eingesetzt wird, während die andere (5) Zunge in der Nähe der Unterseite der Fassung (1) eingesetzt wird, **dadurch gekennzeichnet**, daß das hinten liegende Ende (24) der Haube (2) den Teil (13) der Fassung (1) mit dem u-förmigen Ende sowie das Ende der oberen Zunge (4), deren Schutz es gewährleistet, bedeckt, wobei die obere Zunge (4) sich teilweise außerhalb der Fassung (1) erstreckt.

6. Elektrische Anschlußbuchse nach Anspruch 5, **dadurch gekennzeichnet**, daß die obere Zunge (4) außerhalb der Fassung (1) ein geneigtes Ende aufweist, das zur unteren Wand der Fassung (1) gerichtet ist, wobei dieses Ende durch das U des Teils (13) der Fassung (1) geht und sich also in Richtung des Inneren des Leuchtrings (7) erstreckt.

7. Elektrische Anschlußbuchse nach Anspruch 6, **dadurch gekennzeichnet**, daß die Kontaktzungen (4, 5) außerhalb der Fassung (1) hervorspringende Enden aufweisen, die axial stufenförmig angeordnet sind und in die gleiche Richtung geneigt sind, d.h. in entgegengesetzter Richtung zur Lampe (3).

8. Elektrische Anschlußbuchse nach einem der Ansprüche 4 bis 7, **dadurch gekennzeichnet**, daß die Rückseite des Leuchtrings (7) mit einer Rille (75) versehen ist, zum Einführen des Teils (13) der Fassung (1), der Folien (6) sowie zum Einführen des hinten liegenden Endes (24) der Haube und der oberen Zunge (4).

9. Elektrische Anschlußbuchse nach Anspruch 8, **dadurch gekennzeichnet**, daß zur Bildung von demontierbaren Verbindungsmitteln zwischen der Monoblock-Untereinheit (1, 2) und dem Leuchtring (7) in Form von axial montierbaren komplementären Steckmitteln, die Fassung (1) an ihrer Basis seitlich geneigte Stützglieder (12) aufweist, die jeder ein Profil (15) mit einem geneigten Abschnitt definieren, der sich an jedem seiner Enden an ein senkrechtes Teil anschließt.

10. Elektrische Anschlußbuchse nach Anspruch 9, **dadurch gekennzeichnet**, daß zur Bildung der komplementären Steckmittel der Leuchtring (7) zwei Überstände (74) aufweist, die sich gegenüberstehend angeordnet sind und innen jeweils ein Gegenprofil (76) aufweisen, das an das Profil (15) der Stützglieder (12) angepaßt ist.

11. Elektrische Anschlußbuchse nach Anspruch 10, **dadurch gekennzeichnet**, daß die Überstände (74) einen Stützsockel für die Haube (2) darstellen.

12. Elektrische Anschlußbuchse nach Anspruch 10 oder 11, **dadurch gekennzeichnet**, daß die Profile (15) der Untereinheit (1, 2) und die Gegenprofile (76) des Leuchtrings (7) in komplementärer Weise wenigstens einen Vorsprung und eine Rille für ihre axiale gegenseitige Verriegelung tragen.

13. Elektrische Anschlußbuchse nach einem der Ansprüche 9 bis 12 und nach Anspruch 7, **dadurch gekennzeichnet**, daß die untere Zunge (4) dazu bestimmt ist, über ihr Ende zwischen den beiden geneigten Stützgliedern (12) gelagert zu werden.

14. Elektrische Anschlußbuchse nach einem der Ansprüche 1 bis 13, **dadurch gekennzeichnet**, daß der Leuchtring (7) zwei axiale hervorstehende Rippen (73) aufweist zum Zusammenwirken mit einer Kante (21), mit der das vorne liegende Ende der Haube (2) versehen ist und zum axialen Feststellen in einer Richtung der Untereinheit (1, 2), wobei die Rippen (73) dazu dienen, auf der Kante (21) aufzuliegen.

15. Elektrische Anschlußbuchse nach einem der Ansprüche 1 bis 14, **dadurch gekennzeichnet**, daß die Mittel zur axialen Verbindung wenigstens in die Richtung von der Vorderseite der Untereinheit bis zur Rückseite der Untereinheit (1, 2) zwischen der Haube (2) und der Fassung (1) wirken.

16. Elektrische Anschlußbuchse nach Anspruch 15, **dadurch gekennzeichnet**, daß die Haube (2) eine schräge Einkerbung (25) zum Zusammenwirken mit der Vorderseite der Fassung (1) aufweist.

17. Elektrische Anschlußbuchse nach einem der Ansprüche 1 bis 16, **dadurch gekennzeichnet**, daß die Fassung (1) auf jeder ihrer Seitenflächen eine Rille (14) aufweist zum Zusammenwirken mit Vorsprüngen (26) von komplementärer Form, die sich auf den Seitenwänden der Haube (2) befinden und zur Montage durch Einrasten der Vorsprünge (26) in die Rillen (14), wobei die Vorsprünge und Rillen von den abmontierbaren Verbindungsmitteln (15, 76) getrennt sind.
